# EUROPEAN PATENT APPLICATION

(11) **EP 2 306 397 A1**
(43) Date of publication of application: **06.04.2011**
(21) Application number: 09305932.7
(22) Date of filing: 01.10.2009
(51) Int. Cl.: G06T 5/00

(54) **Method and system for optimizing lens aberration detection**

(71) Applicant: Thomson Licensing, 92130 Issy-les-Moulineaux (FR)
(72) Inventor: Hassenpflug, Frank, 78052, Villingen-Schwenningen (DE); Boehning, Martin, 72285, Pfalzgrafenweiler (DE); Endress, Wolfgang, 78050, Villingen-Schwenningen (DE)
(74) Representative: Thies, Stephan

(57) **Abstract**

The present invention relates to a system and method (1400) of processing image data to detect aberrations in an image. An exemplary method includes determining an origin of a coordinate system superimposed on the image (1402). The method further includes partitioning the image into a plurality of segments, such that the partitioning is performed in relation to the coordinate system (1404). Further, the method (1400) includes spanning each of the plurality of segments using a plurality of analysis lines (1406), and choosing within each of the plurality of segments a single analysis from the plurality of analysis lines based on predetermined criteria (1408). The method further provides for obtaining for each of the chosen analysis lines in each of the plurality of segments a coordinate address within the image (1410), and providing the coordinate address of each of the chosen analysis lines to an algorithm for detecting chromatic aberrations along each of the chosen analysis lines throughout each of the plurality of segments in the image (1412).

## Description

The present invention relates to the field of optical lens systems. In particular, exemplary embodiments of the present invention relate to a method and system for detecting chromatic aberrations.

The optical elements used by cameras and other optical devices to collect images from the environment often introduce errors into the images. Such errors may include various aberrations that distort the color or perspective of the images. Such errors may be perceptible to a viewer and, thus, may decrease the accuracy or aesthetic value of the images.

Two common types of error introduced into images by optical systems are chromatic distortions and curvilinear distortions. Chromatic distortions are caused by the wavelength dependency of the refractive index of the materials used in the optical elements. The different refractive indices lead to different focal points for the differing wavelengths. As discussed in further detail below, this may lead to blurring of the colors in images. Curvilinear distortions may be caused by optical elements that differ from ideal designs, which can lead to different focal points for light entering the optical elements at different points. This type of distortion may cause curvature in lines that should be straight in images and, thus, cause distortions in perspective.

Various systems have been implemented to detect for these distortions in image collection systems, so that such distortions could be corrected by appropriate processing. Generally, image aberration detection may take place prior to the collection of the images, by modification of the design of the optical elements, or after image collection, through processing of stored images in a computer system. While significant advancement has been made in perfecting the design of complex optical elements to minimize image distortions, the availability of increasingly powerful microprocessors of ever decreasing size has made the use of post-collection processing to detect image distortions practical within image collection systems. Still, there is a need for improving abilities of image processing modalities, such that detection of lens aberrations is performed with more efficiency while providing high image quality.

U.S. Patent Application Publication No. 2008/0062409, to Utsugi, which claims priority to a PCT application, purports to disclose an image processing device for detecting chromatic aberrations. Accordingly, the system has an input section and a detecting section. The input section receives raw data made up of color components arranged in each pixel in a predetermined pattern. The detecting section detects a color shift amount by calculating a correlation between two color components included in the raw data. The detection section further determines the chromatic aberration of magnification of the optical system used for capturing the image from the color shift amount.

U.S. Patent No. 6,323,934 to Enomoto purports to disclose an image processing method for correcting at least one of lateral chromatic aberration, distortion, brightness, and blurring caused by an image collection lens. The method is generally used to correct low quality images on photographic film, but may also be used to correct images collected using a digital camera. The images are scanned from the film into an electronic device at a resolution sufficient to minimize distortions from the scanning process. The aberration to be corrected is selected, and lens data specific to the aberration is used to perform the correction calculations. The corrections are generally performed in two steps. In a first step, a lateral chromatic aberration is corrected and, in a second step, curvilinear distortions are corrected.

U.S. Patent No. 7,123,685, to Okada et al. purports to disclose an image processing device for correcting aberrations caused by a lens in an image collection device. The technique is claimed to simultaneously correct both chromatic aberrations and distortions. A correction vector is calculated for each pixel in a color plane of an image based on the lens characteristics. The image is separated into the individual color planes, and then the correction vector is applied. The corrected color planes are then recombined to form the image. The correction vector is also purported to correct for camera shake, i.e., the failure of an operator to hold the camera steady.

An improved method and system for detecting lens aberrations is desirable.

A method of processing image data according to the present invention is set forth in claim 1. The method relates to optimizing chromatic aberration detection in acquired images. Accordingly, the method includes processing the image, whereby an origin of a coordinate system is superimposed on the image. The image is thereafter partitioned into a plurality of segments, such that the partitioning can be performed in relation to the coordinate system. The method further includes spanning each of the plurality of segments using a plurality of lines, also termed analysis lines. The analysis lines provide candidate paths along the image in which aberration detection is performed. In addition the method includes choosing within each of the plurality of segments based on predetermined criteria a single analysis line from the plurality of analysis lines. The method further includes obtaining for each of the chosen analysis lines in each of the plurality of segments a coordinate address within the image, and providing the coordinate address of each of the chosen lines to an algorithm for detecting chromatic aberrations along each of the chosen analysis lines throughout each of the segments in the image.

In one exemplary embodiment, the predetermined criteria for choosing the single analysis line along which to perform the LCA detection include choosing the longest analysis line that crosses the greatest number of image edges, borders lines, structure, etc., within each of the plurality of image segments. Further, the method may assign a coordinate address to each of the chosen analysis lines for each color plane in which the image is analyzed. In achieving such analysis lines, the partitioning of the image may be performed symmetrically in relation to the coordinate system.

A system for processing image data to detect aberrations in an image is set forth in claim 9. The system is adapted for processing image data to detect aberrations in an acquired image. The system includes an image acquisition system having optical elements adapted for acquiring an image. The system further includes an image processing system coupled to the image acquisition system. In the exemplary embodiment, the image processing system is adapted to determine an origin of a coordinate system superimposed on the image. Further, the image processing system may partition the image into a plurality of segments, such that the partitioning is performed in relation to the coordinate system. The processing system is further adapted to span each of the plurality of segments using a plurality of analysis lines. Within each of the image segments an analysis line is chosen from the plurality of analysis lines based on predetermined criteria. The system further includes a detection system adapted to receive the coordinate address of each of the chosen analysis lines, and execute an algorithm for detecting chromatic aberrations along each of the chosen analysis lines throughout each of the segments in the image.

Exemplary embodiments of the present invention are described with reference to the accompanying drawings. The exemplary embodiments set forth herein merely exemplify the invention. Plural possible modifications may be apparent to the skilled person based on the disclosure set forth herein. The scope of the present invention is defined in the appended claims of the present application.
Fig. 1 is a diagram that is useful in explaining chromatic aberrations.
Fig. 2 is a diagram that is useful in explaining lateral chromatic aberrations.
Fig. 3 is a diagram that is useful in explaining pincushion distortions.
Fig. 4 is a diagram that is useful in explaining barrel distortions.
Fig. 5 is a diagram showing a polar coordinate system superimposed over a distorted image on a Cartesian coordinate system, which may be used to detect lens chromatic aberrations, abbreviated herein as LCA, in accordance with an exemplary embodiment of the present invention.
Fig. 6 is a graphical representation used for detecting lens chromatic aberrations, in accordance with an exemplary embodiment of the present invention.
Fig. 7 is an illustration of a coordinate system superimposed on an image, in accordance with an exemplary embodiment of the present invention.
Fig. 8 is another illustration of a coordinate system superimposed on an image, in accordance with an exemplary embodiment of the present invention.
Fig. 9 is an illustration of a segmented image, in accordance with an exemplary embodiment of the present invention.
Fig. 10 illustrates a graphical construction used in detecting lens chromatic aberrations, in accordance with an exemplary embodiment of the present invention.
Fig. 11 illustrates another graphical construction used for detecting LCA, in accordance with an exemplary embodiment of the present invention.
Fig. 12 illustrates a graphical analysis used for detecting LCA, in accordance with an exemplary embodiment of the present invention.
Fig. 13 illustrates an image configured to be analyzed for LCA detection, in accordance with an embodiment of the present invention.
Fig. 14 illustrates a block diagram of a process flow for optimizing detection of LCA in an image, in accordance with an exemplary embodiment or the present invention.
Fig. 15 illustrates a block diagram of a system for optimizing detection of lens chromatic aberrations within an image, in accordance with an exemplary embodiment of the present invention.

In accordance with an exemplary embodiment of the present invention, an imaging processing system may be embedded in an image acquisition device, such as a digital camera, a digital video camera, and the like, to detect lateral chromatic aberrations and curvilinear distortions in real time as the images are collected. In the process, images may be collected in real time and analyzed by various algorithms for detecting lateral chromatic aberrations. Such algorithms may use various mathematical schemes to manipulate image data, so as to for example, generate lens coefficients characterizing imperfections inherent to the optical elements of the image acquisition system. In so doing, the lens chromatic aberrations can be detected indirectly, that is, without actually accessing those optical elements within the imaging system. Furthermore, information gathered from the aberration detection process, as derived from the systems and methods described herein, may better yet facilitate systems and methods for correcting such chromatic aberrations.

Exemplary embodiments of the present invention, as disclosed herein, provide improvements for the systems and methods disclosed in the aforementioned referenced application for detecting lens aberrations in images. As will be described further below, such improvements include a refining of the aberration detection process, whereby an image is segmented into multiple sections. Each segment is further analyzed, via graphical methods, for determining which portions of the image have clear and noticeable chromatic aberrations. The identification of such portions may be one of several initial steps used in the aberration detection process for optimizing and providing a more efficient and accurate detection process, as disclosed by the embodiments of the present invention. Furthermore, the disclosed process may be envisioned as being implemented as part of an overall automated process for detecting the LCA. This may include minimizing user intervention, thereby, eliminating any subjectivity which could otherwise be introduced to the detection process. This provides more uniform processing and higher quality of output images.

Turning now more specifically to the disclosed methods and systems. As is well known, images are typically made up of multiple pixels, where each pixel represents a combination of three colors, namely, red, green and blue. Red, green and blue are respectively abbreviated as R, G and B herein. By assigning a certain intensity to each of the RGB component for each pixel, it is possible to "trick" a human eye to perceive the pixel as having almost any color of the visible spectrum, provided the right combination of RGB is chosen for the desired color. In addition, it is no less important to ensure that the three RGB color components for any particular pixel are spatially aligned relative to one another, so that the pixels render the images uniformly, both in color and shape, across the image plane. Because spatial alignment between color components is an important concept in that it impacts the manner pixels and images are ultimately perceived, it is useful to conceptualize a pixel as an element having three separate color planes defined for each color, i.e., one for R, one for G and one for B. Because the color planes span the entire image plane, it follows that an image can be thought of as being made up of three separate images, as defined by the three RGB color planes.

To the extent performance of optical elements of an image acquisition system depend on the wavelength of light used for acquiring the image, as well as on the geometrical attributes of such elements, chromatic aberrations may be manifested as image distortions due to misalignment and/or shifting between the color planes of the pixels in the acquired image. Accordingly, the disclosed systems and methods are adapted to analyze segments of images by probing the color planes of certain chosen pixels throughout the acquired image. The aim of such analysis is to determine which pixels throughout a segment of an image have color planes that are misaligned, thereby displaying relatively large distortions across the segment of the image. More specifically, in one embodiment, a segment of an image is analyzed along certain radial lines in a single color plane, such as the G plane. All segments of the image are similarly analyzed to form a baseline image in a particular color plane to which the other color planes can be compared. Thereafter, additional processing may be used to correlate and quantify the manner by which the RGB color planes are shifted relative one another. Such additional detection processing is further disclosed in the above application, incorporated herein by reference, where the shifts between the various RGB planes are characterized by quantities termed "shift vectors." These quantities are used together with additional graphical and algebraic algorithms for deriving a matrix representation, whose coefficients provide desired lens coefficients that define the chromatic aberration in the acquired images.

Those skilled in the art will appreciate that the system and algorithms used therewith for detecting the LCA, as described below, may be implemented through a combination of hardware and/or software components. Moreover, technical effects provided by the invention include the correction of images for spherical and chromatic aberrations, lowering the need for costly, high accuracy lens systems and allowing correction of aberrations as the images are collected.

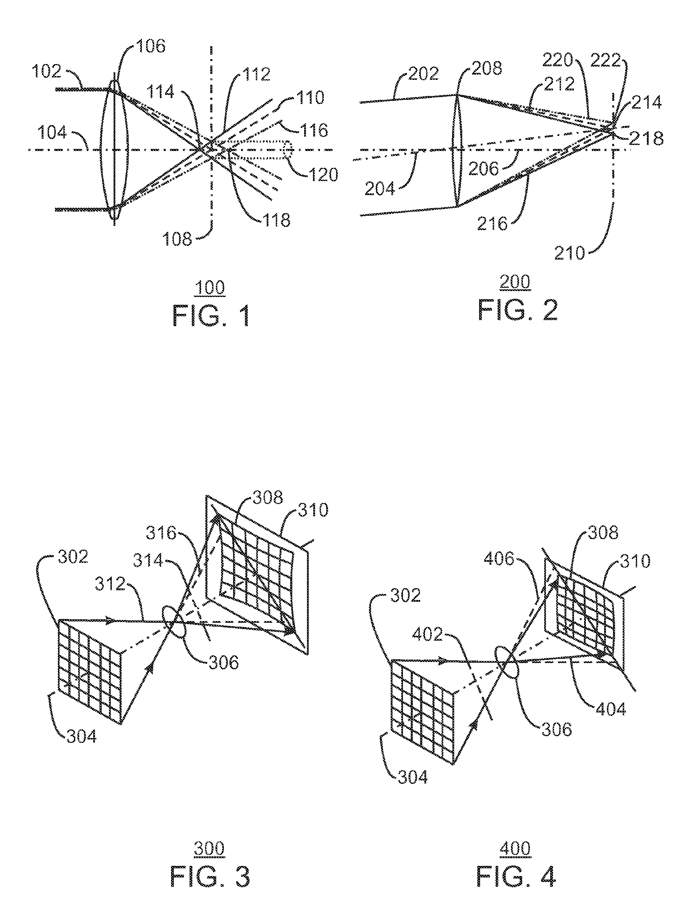

Fig. 1 is a diagram that is useful in explaining chromatic aberrations. In Fig. 1, a light beam 102 is aligned along an axis 104 and impinges on a lens 106. The lens 106 focuses the light beam 102 toward a desired image plane 108. However, the material of the lens 106 will generally show chromatic dispersion, wherein the refractive index of the lens 106 depends on the wavelength of the light impinging on the lens 106. Accordingly, while one wavelength of light, for example, yellow light 110, may be focused at the desired image plane 108, the refractive index for blue light 112 will be higher, leading to a higher angle of refraction from the lens 106. Thus, the focal point 114 of the blue light 112 may land in front of the desired image plane 108. Similarly, a red light 116 may have a lower index of refraction in the lens 106 than the yellow light 110, leading to less refraction by the lens 106, providing a focal point 118 that is beyond the desired image plane 108. The failure of the different wavelengths 110, 112, and 116 to focus at the same point, e.g., on the desired image plane 108, leads to a circle-of-uncertainty 120, over which a single point of an image may be spread out, depending on the colors in the point. This may cause color fringes to appear around features in an image. Similar issues cause lateral chromatic aberrations, as discussed with respect to Fig. 2.

Fig. 2 is a diagram that is useful in explaining lateral chromatic aberrations. In Fig. 2, a light beam 202 is aligned along an axis 204 that is not aligned with an axis 206 of a lens 208 and desired image plane 210. The light beam 202 impinges on the lens 208 and is focused toward the desired image plane 210. However, for the reasons discussed with respect to Fig. 1, different wavelengths of light are refracted at different angles by the lens 208. Accordingly, while a yellow light 212 may have a focal point 214 that lands at a correct position on the desired image plane 210, a blue light 216 may have a focal point 218 that is offset to one side of the yellow light 212. Similarly, a red light 220 may have a focal point 222 that is offset on the opposite side of the yellow light 212 from the blue light 216. This blurring of the colors may cause offset color fringes, e.g., magenta or green fringes, to appear on one side of an object. Chromatic aberrations are not the only distortions that may be caused by optical elements, such as lenses. Curvilinear distortions, as discussed with respect to Figs. 3 and 4 may also be an issue.

Curvilinear distortions are distortions in which straight lines in a subject appear to be curved in an image. Various types of curvilinear distortions exist, including pincushion and barrel distortions as discussed with respect to Figs. 3 and 4. In the illustration 300 of a pincushion distortion shown in Fig. 3, a subject 302 is focused along an axis 304 through a lens 306 to form an image 308 at an image plane 310. The desired mapping of points from the subject 302 to the image 308 is illustrated by the rays 312. However, due to distortions caused, for example, by the placement of an aperture or stop 314 between the lens 306 and the image 308, the rays may not land where they are expected, as indicated by ray 316. This may cause the sides of the subject 302 to appear to curve inwards in the image 308.

Similarly, as shown in the illustration 400 in Fig. 4, the placement of an aperture or stop 402 between the subject 302 and the lens 306 may make rays 404 land in different places than expected, as indicated by rays 406. This distortion may make the sides of the subject 302 appear to curve outwards in the image 308.

To detect distortions of the type discussed above in Figs. 1-4, an image acquiring and processing system may employ a real time algorithm adapted for analyzing acquired images, so as to quantify the amount and magnitude of the distortions across the image. Generally, because an image is made up of a two dimensional grid of pixels, such analysis is typically done while mapping the pixels along one or more two-dimensional coordinate systems. In this manner, it is possible to graphically and/or algebraically analyze each color plane, as well as their relative positions to another throughout the input image.

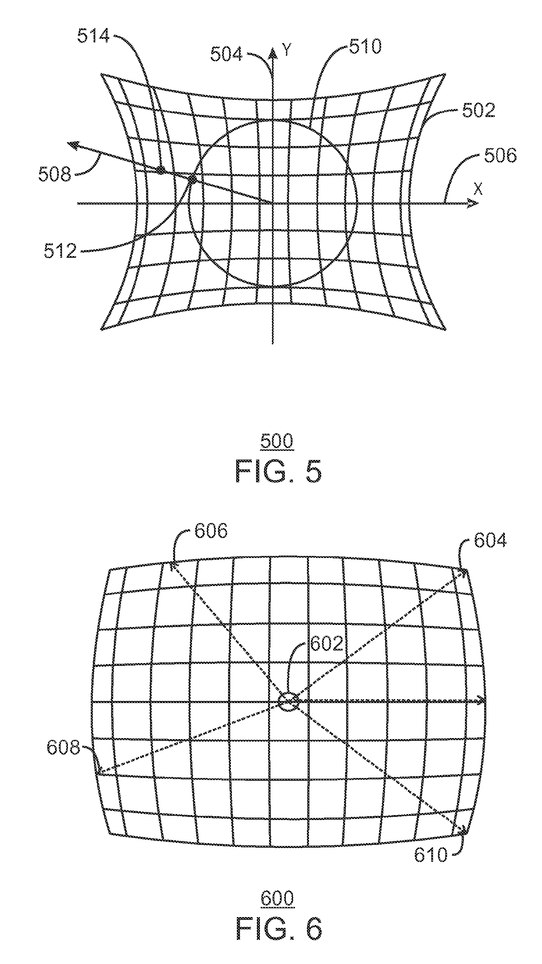

Accordingly, Fig. 5 is a diagram showing a polar coordinate system superimposed over a distorted image on a Cartesian coordinate system, in accordance with an exemplary embodiment of the present invention. An image 502 shown in this illustration 500 has a pincushion distortion. A Cartesian coordinate system is imposed over the image 502, wherein the vertical axis 504 is labeled as "y" and, similarly, the horizontal axis 506 is labeled as "x". The polar coordinates are represented by the vector 508 illustrating the angle of a point from the center, and the circle 510 representing the distance of the point from the center. In the illustration 500, the vector 508 and circle 510 represent a radial pixel coordinate, e.g., coordinate 512, of an input image. Generally, a radial pixel coordinate of a desired image, e.g., coordinate 514, may be expected to lie along the vector 508, as well. However, if the input image shows a pincushion distortion, as in Fig. 5, coordinate 514 would be at a farther distance out from the center than coordinate 512. Hence, the variation between coordinates 512 and 514 may stem from the relative shifting between the RGB color planes of the image. As described below, the radial coordinate construction similar to that described above may be useful for analyzing segments of images to determine along which lines across the image lens aberrations are most pronounced. Consequently, such analysis provides further efficient processing for detecting the LCA within the image.

Fig. 6 is a graphical representation used for detecting lens chromatic aberrations, in accordance with an exemplary embodiment of the present invention. The graphical representation 600 is a depiction of an input image shown to have acquired one or more of the above discussed chromatic aberrations. While the representation 600 may seem to depict a barrel-type aberration, it should be borne in mind that ensuing discussion of an exemplary embodiment of the present invention may be applicable to other types of aberrations in general and to chromatic aberrations in particular.

As illustrated, the image 600 has a center 602 from which multiple radial lines emanate. Accordingly, radial lines 604, 606, 608 and 610 originate from the center 602, such that each of the radial lines may have a different length and radial direction throughout the image 600. The lines 604-610 may mark paths along the image replete with distortions and/or artifacts, such as those resulting from the above described chromatic aberrations.

In accordance with an exemplary embodiment of the present invention, one or more of the lines 604-610 may be chosen for analyzing pixel data therethrough, in at least one of the RGB planes. For example, in one embodiment, pixel data may be analyzed along the radial lines 604 and 608 in the G plane, while in other embodiments the pixel values may be analyzed along the lines 606 to 610 in the R plane. Still, in other embodiments the pixel data may be analyzed on all of the lines 604-610 and/or additional radial lines, not shown herein, in just one or all of the RGB planes. As will be described below, the choice of radial lines for analyzing pixel data may depend on various parameters and predetermined criteria adapted to increase the accuracy and efficiency of the detection process. The method ultimately enables a user, an algorithm, or a combination thereof to automatically and/or dynamically detect aberrations in acquired images.

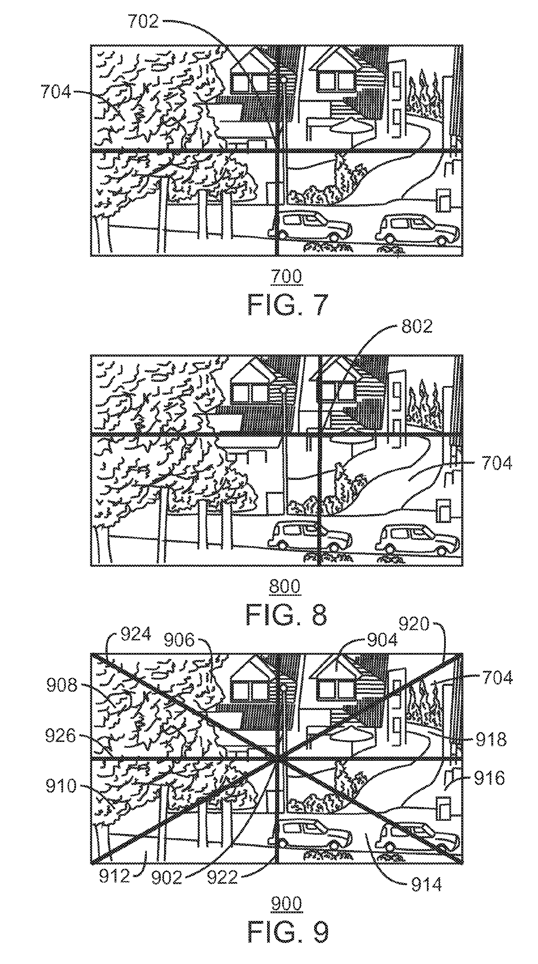

Figs. 7 and 8 are illustrations of a coordinate system superimposed on images 700 and 800, respectively, in accordance with an exemplary embodiment of the present invention. While the images 700 and 800 may include similar visual depictions, such as a residential setting depicted by the images, those skilled in the art will appreciate that exemplary embodiments of the present invention are not limited to the illustrated depiction. Moreover, exemplary embodiments of the present invention may be applicable to a wide variety of images having varying degrees of resolution, line density, color uniformity and/or other characteristics.

Accordingly, Figs. 7 and 8 illustrate a first step in a series of steps for analyzing images for chromatic aberrations. The graphical construction provided in relation to the images 700 and 800 can be used to initially determine those radial lines, such as the lines of Fig. 6, through which analysis can be carried out for detecting chromatic aberrations in at least one of the RGB planes of the disclosed images. For example, as illustrated by Fig. 7, the acquired image 700 includes a coordinate axis 702 superimposed on a visual depiction 704 of the image. As further illustrated by the Fig. 7, the choice of origin of the coordinate axis 702 is placed at the center of the image 700. Generally, the placement of the coordinate axis placed on the image plane will coincide or may relate to the placement of the optical axis on which the optical elements, i.e., lenses, contained within the image acquisition system are disposed. As with the coordinate system center 602, shown in the image 600 of Fig. 6, the center 702 of the image 700 provides a center point from which radial lines originate in performing the LCA detection analysis.

Similarly, Fig. 8 shows an image 800 having a visual depiction similar to the visual depiction 704 of Fig. 7. As illustrated, a coordinate system 802 is superimposed on the image 800, such that the coordinate system is placed off-center to the right of the visual depiction 704. Again, the origin of the coordinate axis 802 provides the center point from which the radial lines, such as the radial lines 604-610 of Fig. 6, will project in an outward fashion throughout the image 800 to facilitate the LCA analysis. Because the placement of the coordinates 802 will generally depend on the alignment of the optical elements relative to the image plane, then Fig. 8 may exemplify a situation in which those optical elements of the image acquisition system may have been misaligned during image acquisition, giving rise to off-centered displacement of the coordinate axis 802.

Fig. 9 is an illustration of a segmented image 900, in accordance with an exemplary embodiment of the present invention. As illustrated, the image 900 includes the visual depiction 704 similar to that depicted by the images 700 and 800 of the above Figs. 7 and 8, respectively. The image 900 further includes a coordinate system 902 superimposed at the center of the depiction 704 of the image 900. As further illustrated, the image 900 is partitioned into multiple segments, namely, segments 904, 906, 908, 910, 912, 914, 916 and 918. Lines 920, 924 and 926 stretch across the image 900, as they pass through the center of coordinate system 902, thereby rendering the eight triangular segments 904-918 to be symmetrically spaced about the origin of the coordinate system 902.

The above segmentation of image 900 is exemplary. Hence, the exemplary embodiments of the present invention contemplate other types of image segmentations, which generally are left to the discretion of a user, or to an algorithm adapted to preprocess acquired images prior to the LCA detection. Such algorithms may partition the image 900 into smaller and greater number of segments or, alternatively, into larger and smaller number of segments by corresponding line, for example, lines 920-926 geometries. In addition, while the above portioning of the image 900 may display a certain symmetry about the origin and/or relative to the coordinate axis 902, other methods of partitioning may be employed to yield uneven segmentations which could otherwise form asymmetrical shapes about the coordinate axis 902.

It should further be borne in mind that, as the number of segments in an analyzed image increases, so does the computational power needed for analyzing each of the segments making up the image. Accordingly, the number of segments can be increased or decreased in any particular image by increasing or decreasing, respectively, the number of lines crossing the origin of the coordinate system 902, or other reference points within the image 900. Once the image is partitioned into a desired amount of segments as, for example, achieved by the segments 904-910, each of those segments may be further analyzed, via additional geometrical methods described below, for detecting chromatic aberrations.

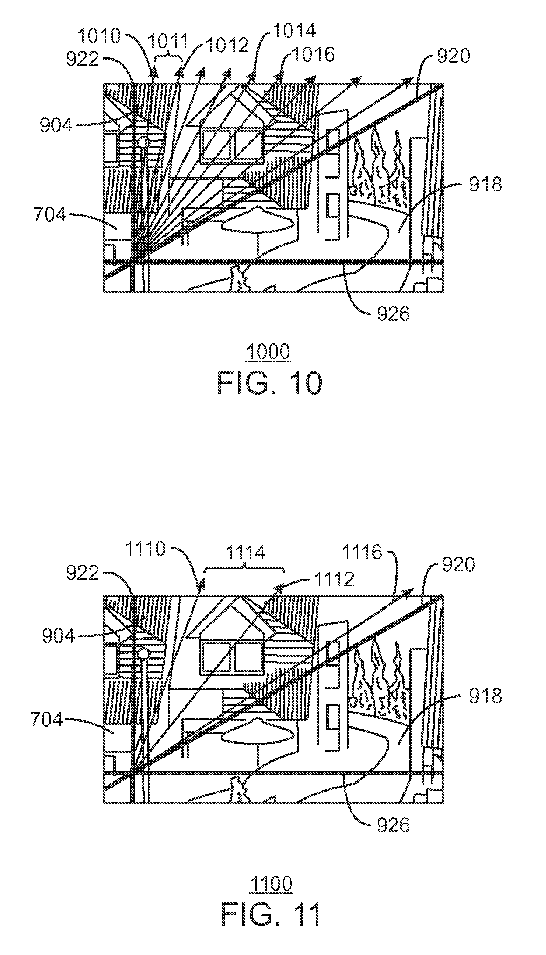

Fig. 10 illustrates a graphical construction used in detecting chromatic aberrations, in accordance with an exemplary embodiment of the present invention. The figure illustrates a portion of the image 900 of Fig. 9 with segments 904 and 918 being bounded by lines 922 and 926. Hence, the illustration depicts an upper right quadrant of the depiction 704, as illustrated by Fig. 7. In addition, the line 920 bisects the shown quadrant, such that the segment 904 is disposed above the line 904, while the segment 918 is disposed below the line 920. As further illustrated by the Fig. 10, multiple arrows are shown to emanate from the origin of the coordinate system 902 to span the segment 904. Such arrows, labeled by reference numerals 1010, 1012, 1014 and 1216, maybe used to represent some or all of the arrows depicted in the Fig. 10.

In an exemplary embodiment, the image segment 904 may be analyzed along some or all of the radial lines 1010-1016. The radial lines 1010-1016 may facilitate a user or an algorithm to further analyze the segment 904 for detecting chromatic aberration in the image 900. As will be described below, by the subjecting the arrows 1010-1016 to certain geometrical criteria, it may be possible to determine which of the arrows 1010-1016 provides an optimal line along which aberration detection can be performed within the segment 904.

As further illustrated by the Fig. 10, spacing 1011 designates the spacing between each of the radial lines 1010-1016 at certain radial points in the segment 904, or alternatively at particular angular spacing between the lines 1010-1016. A user and/or an algorithm may set the spacing 1011 to have a constant value or a varying value so as to achieve a desired spacing between the arrows 1010-1016. Hence, by choosing the desired spacing 1011, the user and/or an algorithm may determine the number of lines/arrows, i.e., 1010-1016, spanning each of the segments 904-918 within the image 900. The smaller the spacing 1011 between each of the arrows the greater the number of lines/arrows 1010-1016 contained within the image 900.

To determine the number of lines/arrows 1010-1016 that should be used in each segments 904-918 for analyzing the image 900, it may be prudent to first consider the accuracy desired in the detection process of the LCA. By the same token, it may also be useful to consider the computational effort needed to achieve the desired accuracy. While increasing the number of radial lines 1010-1016 within the segment may increase the accuracy in the LCA detection, increasing the number too excessively may require computational efforts which may be too demanding, or are otherwise too costly in power, time and/or resources. In accordance with an exemplary embodiment of the present invention, an algorithm may be employed, whereby the number of radial lines 1010-1016 is chosen so as to achieve a balance between the accuracy of detection versus the computational efforts in performing such analysis. To achieve such balance, various optimization schemes and/or mathematical algorithms based on, for example, probabilistic and/or statistical models, or models based on finite element schemes and the like may be used to determine the optimal spacing between the arrows 1010-1016.

Fig. 11 illustrates another graphical construction used for detecting LCA, in accordance with an exemplary embodiment of the present invention. Fig. 11 is similar to Fig. 10 in that it illustrates the same portion of the image 900, including the segments 904 and 918 of the visual depiction 704. As further illustrated, the segment 904 includes arrows 1110, 1112 and 1116 emanating from the origin of the coordinates system 902. The arrows 1110, 1112 and 1116 are also bounded by the lines 920 and 922. In the exemplary embodiment illustrated by the Fig. 11, a spacing 1114 is placed between the arrow 1110, 1112 and 1116, which is illustrated as being greater than the spacing 1011 shown in Fig. 10. Thus, the spacing 1114, chosen between lines/arrows of Fig. 11, should lead to accuracy levels of detection lower than those achieved for the image of Fig. 10. As mentioned above, such smaller spacing may be desirable to use when computational resources are limited, thereby compromising to some extent detection accuracy of LCA within the image.

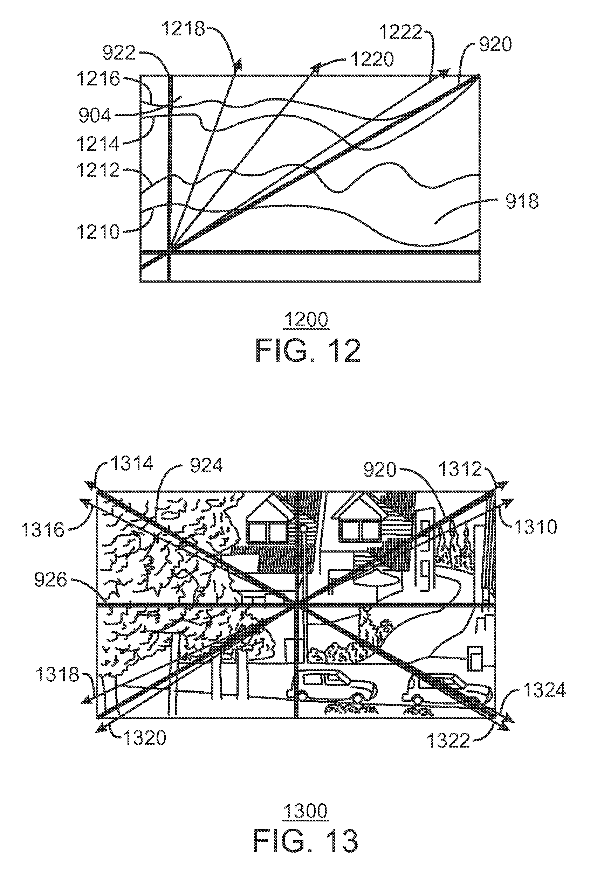

Fig. 12 illustrates a graphical analysis used for detecting LCA, in accordance with an exemplary embodiment of the present invention. The figure illustrates an image 1200, which may be similar to the figures discussed above, but illustrating more detailed structures and features than those shown in Figs. 700-900. It should be borne in mind that while the features shown in the Fig. 12 may seem rather random and uncorrelated, the purpose of such an over simplified depiction is to illustrate the general attributes of an exemplary embodiment of the present invention. Accordingly, embodiments of the present invention may apply to images having larger line densities, some of which may be replete with complex structures and/or features.

The image 1200 displays four major lines, namely, lines 1210, 1212, 1214 and 1216, along which may be performed an analysis for detecting chromatic aberrations in images. The lines 1210-1216 illustrate notable features in the image 1200. Such notable features may include certain lines representing clear edges of particular structures or other features displayed by the image 1200. The lines 1210-1216 may also represent clear borders between various structures depicted by the image 1200, or other distinct and/or outstanding marks within the image 1200. The lines 1210-1216 may also represent transition regions, where line densities within the image 1200 change dramatically from one portion to another portion, which may be adjacent or opposed to other portions, contained within the image 1200. Further, in a preferred embodiment, the lines 1210-1216 may be displayed in a single color plane, i.e., G plane, such that the analysis of pixel data is performed initially only in that color plane. Thus, the detection analysis, as described herein, may be done initially on a single color plane and, thereafter, correlated to other color planes forming the image 1200.

As further illustrated, radial lines/arrows 1218, 1220 and 1222 are displayed to span the segment 904. As discussed with reference to Figs.10 and 11, such lines provide a radial analysis for detecting the LCA across the segment 904 of the image 1200. In accordance with an exemplary embodiment of the present invention, the method described herein chooses the longest arrow among the arrow 1216-1222 crossing the most lines, i.e., 1210-1216, in the segment 904 as the line for performing the LCA detection. In other words, chromatic aberration detection is performed along those arrows that intersect the maximal number of edges, and have a maximal length among those arrows that have the aforementioned maximal number of edge, i.e., lines 1210-1216 crossings. In the illustrated embodiment, the line/arrow 1222 is the longest arrow of the arrows crossing all four of the lines 1210-1216. By virtue of being the longest line, the arrow 1222 covers a larger display space than the other arrows which, too, may have edge crossing within the segment 904. Therefore, an analysis line, such as the line 1222, within the segment 904 having a large display space with maximal number of edges may provide a path along which aberrations are mostly pronounced. Consequently, by performing LCA detection along such lines, it may be possible to detect a majority of those aberrations which stand out or otherwise render the image objectionable. By analyzing the segment 904 along a single arrow, i.e., arrow 1222, rather than utilizing multiple arrows such as, for example, arrows 1220 and 1222, exemplary embodiments of the present invention advantageously reduce the computational time, power and cost while achieving acceptable detection accuracies.

Fig. 13 illustrates an image 1300 configured to be analyzed for LCA detection, in accordance with an embodiment of the present invention. The image 1300 is similar to the image 900 discussed with reference to Fig 9 in that it displays a similar visual depiction 704, partitioned into the above-mentioned segments 904-918. As further illustrated, the image 1300 has undergone analyses similar to those discussed above with reference to Fig. 12 for each of the segments 904-918. Thus, radial lines/arrows 1310, 1312, 1314, 1316, 1318, 1320, 1322 and 1324, designate those radial lines in each of the segments 904-918, respectively, having the largest length in the segment and crossing the most number of edges in the segment in which that arrow/line is traced. Not surprisingly, the arrows 1310-1324 form lines in the vicinity of the lines 920-926, as the latter are the longest lines crossing the image 1300. Stated otherwise, in a uniformly dense image, lines disposed near the lines 920-926 are long enough such that they have greater probability of crossing more edges or border lines than lines disposed away from the lines 920-926. However, in images where the line densities may not be uniform, analysis lines, i.e., lines 1310-1312, may be disposed along any portion of the analyzed image.

Hence, each of the radial lines 1310-1324 forms a line along which detection for chromatic aberrations is performed. Such detection will generally be done by an automated and/or a computerized algorithm, which obtains the position of the lines 1310-1324 to execute the LCA detection. The position of the radial lines 1310-1324 will typically be given by a set of two coordinates for each radial line, i.e., one for each of the lines 1310-1324. Because an image forms a two dimensional object, a two dimensional coordinate system may be used, such that each set of coordinates for each of the lines 1310-1324 may be given by two coordinate parameters. For example, in a Cartesian coordinate system, those parameters would be specified by an "x" axis coordinate and a "y" axis coordinate. By further example, in a polar coordinate system, the parameters would be specified by a radius "r" from the origin, and a polar angle "theta" measured counter clockwise from the upper right quadrant of the image 1300.

The first set of coordinates of any one of the liens 1310-1324 may generally be given by the origin of the coordinate system 902, from where any of the lines 1310-1324 originate. The second set of coordinates for any of the lines 1310-1324 may be given by the end point of each of the aforementioned lines. Thus, for example, for the line 1312, the second set of coordinates may be given where the arrow 1312 terminates. The set of coordinates for the other arrows 1310-1324 may be specified in a similar manner.

Once all the coordinates, also termed lines addresses, of all the lines 1310-1324 are specified, an automated algorithm intakes the above-mentioned line addresses of the lines 1310-1324 and performs LCA detection along those lines for each segment. As previously mentioned, such detection is further disclosed in the above-mentioned application incorporated herein by reference.

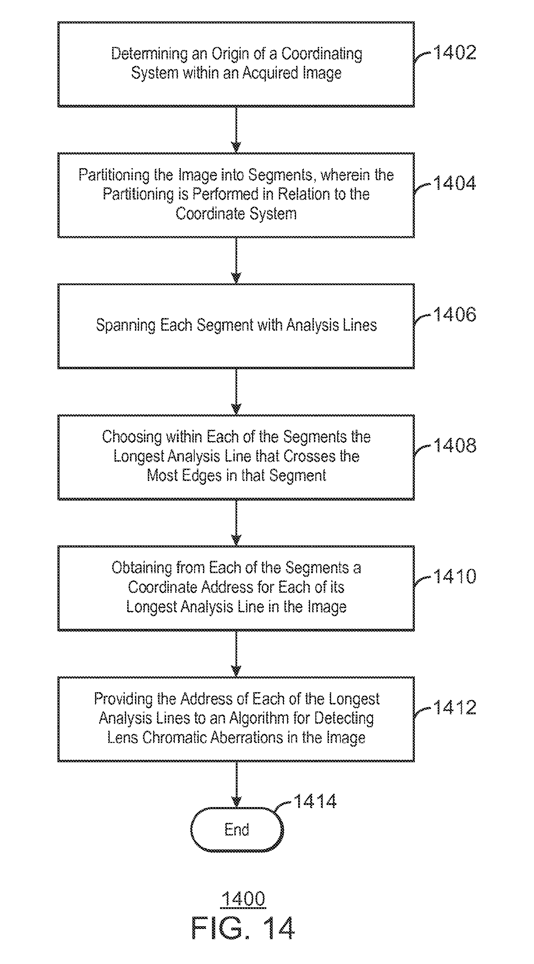

Fig. 14 illustrates a block diagram 1400 of process flow for optimizing detection of LCA detection in an image, in accordance with an exemplary embodiment of the present invention. The block diagram 1400 describes preprocessing of acquired images for obtaining the above mentioned line addresses, thereby further facilitating detection of chromatic aberrations within acquired images. Thus, the below described method may be executed by a user and/or a code stored on a readable medium, such as magnetic memory devices, solid-state flash memory devices, and/or optical memory devices. Furthermore, such a code is adapted to optimize and improve the LCA detection process.

The process flow starts at block 1402 in which an origin of a coordinate system is determined for the acquired image. As mentioned, determining the origin typically depends on the inherent properties of optical elements, which could vary between different image acquisitions systems. From block 1402, the process flow proceeds to block 1404, where the acquired image is partitioned into multiple segments. In accordance with an embodiment of the present invention, the segmentation is generally done in relation to the coordinate system chosen for the image. In other words, the segments forming the image may be bounded by one or more lines of the coordinate system, and/or the segments may be disposed adjacent, opposing or across from other segments within the images.

Next, the process flow 1400 proceeds to block 1406, where each segment of the acquired image is spanned by analysis lines/arrows, such as those discussed above with reference to Figs.10 and 11. The lines spanning the image may be chosen to have a particular spacing therebetween, so as to obtain a balance between the accuracy achieved and the computational effort expanded during the ensuing LCA detection process. In so doing, the process flow 1400 conditions the acquired images, such that the LCA detection process in those images becomes more efficient and optimal.

The process flow 1400 then proceeds to block 1408, where the process flow chooses from within each segment an analysis line which is the longest and crosses the most edges, structures, borders, etc., throughout the segment in which the chosen line is disposed, as discussed with reference to Fig. 12. It should be borne in mind that the step outlined by block 1408 may be repeated for each segment forming the partitioned image. Thereafter, the process flow proceeds to block 1410, where a set of coordinates or addresses is obtained for each of the analysis lines chosen in block 1408 for each segment within the acquired image. As discussed above, each such analysis line is specified by at least two sets of coordinates, as may specified by the type of coordinate system used, such as Cartesian coordinates, or polar coordinates. From block 1410, the process 1400 moves to block 1412, where the addresses specified in the block 1410 for each of the analysis lines is provided to an automated algorithm adapted to detect LCA in the acquired image. Hence, the LCA detection algorithm utilizes the coordinates of the analysis lines to analyze pixel data along the chosen analysis lines for each segment in the image. Finally, the process flow 1400 ends at block 1414.

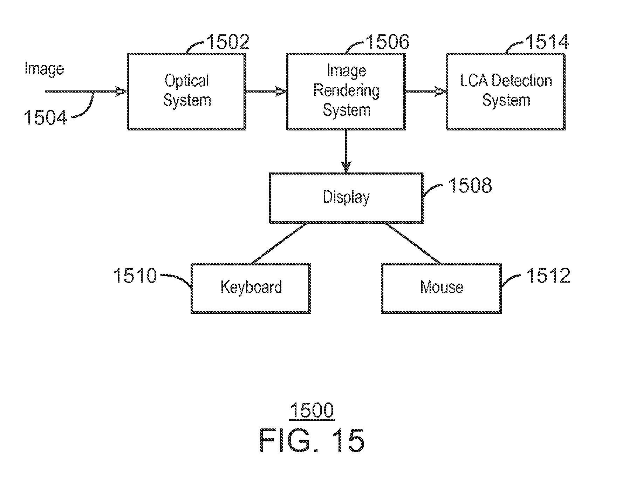

Fig. 15 illustrates a block diagram 1500 of a system for optimizing detection of lens chromatic aberrations within an image, in accordance with an exemplary embodiment of the present invention. The system 1500 provides image acquiring and processing elements for preparing and preprocessing of image before such images are analyzed for the LCA. Hence, the system 1500 operates to execute the algorithms described above with reference to Figs. 7-14 and, in so doing, optimizes the overall aberration detection process.

Accordingly, the system 1500 includes an optical system 1502 adapted to acquire an image 1504. The optical system 1502 may include various optical elements, i.e., lenses prisms, filters and the like, as well as electro-optical elements, which may include charged coupled devices, abbreviated herein as CCDs, photodiodes, complementary metal on silicon, abbreviated herein as CMOS, imaging devices, fiber optics ,etc. These and other devices of the optical system 1502 are adapted to acquire the image 1504 and, thereafter, convert the image into electrical signals.

Such signals are thereafter provided to an image rendering system 1506, adapted to configure the image for viewing and for further digital processing. For example, the image rendering system 1506 may digitize the electrical signals provided by the optical system 1504, so that the image can be manipulated, analyzed and processed in the manner described above with reference to Figs. 7-14. Thus, the system 1506 may include multiple processors and /or memory devices for executing and storing, respectively, software code for optimizing LCA detection algorithms. The image rendering system is further adapted to configure the acquired image, so that it may be viewable as a digital image over a display 1508.

The display 1508 receives the image data from the system 1506 and displays the image across a screen, such as an liquid crystal display, abbreviated as LCD herein, for viewing. The display 1508 may further be coupled to other peripheral devices, such as keyboard 1510 and mouse 1512. The display may be coupled to other peripheral devices, including scanners, printers, faxes and the like. Hence, a user utilizing the display 1508, keyboard 1510 and mouse 1512 may manipulate and analyze the acquired image 1504. Furthermore, the user in concert with the image rendering system 1506 may execute the steps of image analysis described above with regard to Figs. 7-14. For example, upon viewing the image over the display 1508, the user and/or the system 1506 may set the origin across the image, as shown in Figs. 7 and 8, as well as partition the entire image, i.e., image 900, into multiple segments, as described above. The user, via the display 1508 and the additional peripheral devices, together with the system 1506 may also span the image with radial lines as, for example, shown by the radial lines 1010, 1012, 1110 and 1112.

Again, the user in tandem with the system 1506 may determine which analysis line in each of the segments of the image is the longest line that crosses the most edges, borders and so forth. Hence, the system 1506 and/or the user utilizing the display 1508 may further determine the coordinate address of each analysis lines in each segment to arrive at a construction, such as that shown by Fig. 13. Once the above analysis is performed, the analyzed image data is provided to an LCA detection system 1514, adapted for detecting chromatic aberrations in the image 1504. In so doing, the system 1514 analyzes the image 1504 across the analysis lines chosen for each segment, as described by the method 1400.

One of ordinary skill will appreciate that combining any of the above-recited features of the present invention together may be desirable.

## Claims

1. A method (1400) of processing image data to detect aberrations in an image, comprising:
determining an origin of a coordinate system superimposed on the image (1402);
partitioning the image into a plurality of segments, wherein the partitioning is performed in relation to the coordinate system (1404);
spanning each of the plurality of segments using a plurality of analysis lines (1406);
choosing within each of the plurality of segments a single analysis line from the plurality of analysis lines, wherein the choice is based on predetermined criteria (1408);
obtaining for each of the chosen analysis lines in each of the plurality of segments a coordinate address within the image (1410); and
providing the coordinate address of each of the chosen analysis lines to an algorithm for detecting chromatic aberrations along each of the chosen analysis lines throughout each of the plurality of segments in the image (1412).

2. The method (1400) of processing image data according to claim 1, wherein the predetermined criteria comprise choosing the longest analysis line that crosses the greatest number of edges within a segment where the chosen line is disposed.

3. The method (1400) of processing image data according to claim 1, wherein the coordinate address of each of the chosen analysis lines is given for each color plane comprising the image.

4. The method (1400) of processing image data according to claim 3, wherein the partitioning is performed symmetrically in relation to the coordinate system.

5. The method (1400) of processing image data according to claim 1, wherein spanning comprises choosing a spacing between each of the analysis lines in accordance with accuracy and computational performance provided by the detection algorithm.

6. The method (1400) of processing image data according to claim 1, wherein the coordinate address for each of the chosen analysis lines is given by at least two sets of parameters.

7. The method (1400) of processing image data according to claim 6, wherein each set of parameters corresponds to a two dimensional coordinate.

8. The method (1400) of processing image data according to claim 7, wherein the two dimensional coordinate specifies a two dimensional Cartesian coordinate system or a polar coordinate system.

9. A system (1500) for processing image data to detect aberrations in an image, comprising:
an image acquisition system (1502) comprising optical elements for acquiring an image;
an image processing system (1506) coupled to the image acquisition system, wherein the image processing system is adapted to determine an origin of a coordinate system superimposed on the image, partition the image into a plurality of segments, wherein the partitioning is performed in relation to the coordinate system, span each of the plurality of segments with a plurality of analysis lines, choose within each of the plurality of segments a single analysis line from the plurality of analysis lines based on a predetermined criteria, and obtain for each of the chosen analysis lines in each of the plurality of segments a coordinate address within the image; and
a detection system (1514) adapted to receive the coordinate address of each of the chosen analysis lines, and execute an algorithm for detecting chromatic aberrations along each of the chosen analysis lines throughout each of the plurality of segments in the image.

10. The image processing system (1500) according to claim 9, wherein the coordinate address of each of the chosen analysis lines is given for each color planes comprising the image.

11. The image processing system (1500) according to claim 9, wherein the predetermined criteria comprise choosing the longest analysis line that crosses the greatest number of edges within a segment where the chosen line is disposed.

12. The image processing system (1500) according to claim 9, wherein the partitioning is performed symmetrically in relation to the coordinate system.
